# EUROPEAN PATENT SPECIFICATION

(11) **EP 0 989 503 B1**
(45) Date of publication and mention of the grant of the patent: **16.08.2001**
(21) Application number: 98118155.5
(22) Date of filing: 24.09.1998
(51) Int. Cl.: G06F 17/40

(54) **Network system with remote data acquisition**
Netzwerksystem mit Ferndatenerfassung
Système de réseau avec acquisition de données à distance

(43) Date of publication of application: 29.03.2000
(73) Proprietor: ULTRA Proizvodnja elektronskih naprav d.o.o., 1410 Zagorje (SL)
(72) Inventor: Urbanija, Miha, Ing., 1412 Kisovec (SI); Pavlic, Bogdan, Dipl.-Ing., 1410 Zagorje (SI)
(74) Representative: Becker Kurig Straus

(56) References cited:
- EP-A- 0 425 330
- WO-A-87/03116
- US-A- 3 881 094
- US-A- 4 390 951
- US-A- 5 061 916
- US-A- 5 396 246
- US-A- 5 561 610
- US-A- 5 717 379
- US-A- 5 745 849
- ALBERT K: "ON-LINE ALARM FOR SYSTEM FAULTS" ENGINEERING AND AUTOMATION, vol. 18, no. 5, September 1996, page 6/7 XP000643830
- KLAUS SCHNEIDER: "E-Mail an Handy, SMS-Gateway auf Basis von Lotus Notes", MOBILFUNK PROFESSIONELL, , , vol. , no. 8-9, pages 56 to

## Description

The present invention relates to a network system for exchanging information between n>1 peripheral computers and a central computer for remote data acquisition, according to the preamble of claim 1. Such a system is known e.g. from US-A-5 061 916.

The present systems of the state of the art often suffer from insufficient quick reaction on a malfunction of the system to be serviced. This can lead to irreversible damage or expensive resumption of the serviced system. These drawbacks are often not only a result of unreliable detection and transmission of the malfunction in the maintenance system but also at least sometimes a result of the "human factor" that leads under stressing circumstances often to wrong or delayed decisions in the procedure of recognising the malfunction and performing the right steps to eliminate the malfunction of the serviced system.

From US-A-5 061 916 there is already known a similar system which uses facsimile messages. From "Albert K: "On-line Alarm for system faults engineering and automation, vol. 18, No. 5, Sept. 1996, p. 617" there is already known a system using SMs messages.

The object of the present invention therefore is to provide a network system for reliable and quick remote data aquisition in order to ensure quick and reliable elimination of the malfunction or function of the system to be serviced.

This object is achieved by the network system according to claim 1. According to one aspect the invented network system for exchanging information comprises n ( n is an integer) peripheral computers or remote control units and a central computer for remote data acquisition, wherein each of the n peripheral computers comprises at least one communication interface having automatic data transfer function, a processor unit, a memory unit and an output/input interface, wherein the central computer comprises at least one communication interface having automatic data transfer function, a processor unit, a memory unit, a database unit and an output/input interface, the network system further comprising first coupling means for coupling the communication interface of the central computer to the telephone interface of any of the peripheral computers in order to exchange information between the central computer and said peripheral computer, sensor means for providing sensor information or data that relate to at least one characteristic to be detected or monitored, the sensor means comprising a sensor unit for generating the sensor information and a sensor interface, second coupling means for coupling the input/output interface of the at least one peripheral computer to the sensor interface of the sensor means in order to exchange information between the peripheral computer and the sensor means or vice versa, at least one peripheral or remote user unit comprising a user terminal and third coupling means for coupling the user terminal of the at least one user unit to the input/output interface or the communication interface of the central computer in order to exchange information between the central computer and the at least one user unit.

The network system of the present invention comprises a communication interface in each of the remote, peripheral computers and also a communication interface in the central computer. Both communication interfaces have an automatic data transfer function, i.e. each communication is able to establish a connection upon a request or instruction being generated by a processor unit operated by software program. Further messaging of the user units also is initiated by computer program for automatic messaging by means of automatic data transfer function of the communication interface or I/O input/output interface. Consequently, the inventive network system has the advantage that a person is no longer required to distribute messages, information or instructions in the system and therefore the human source of error and delay in the system is avoided.

Preferably, the first coupling means is the Public Switched Telephone Network PSTN (digital or analog), leased line or some other network with data transfer capability, such as mobile communication networks (PCS 1900, DCS 1800, GSM 900, NMT, TACS) satellite communication network (Iridium SDMA, and Iridium AMPS), radio wave data transmission systems. Using an existing communication network, such as GSM for connection of the remote peripheral computers or control units to the central computer or server provides a system with a very flexible and easy way to upgrade change communication structure which enables quick construction of the network system.

The communication interface of the central computer of the invention complies with the standards of the first coupling means for instance, can be a ISDN-modem, a GSM-modem or a RAS server (RAS = Remote Access Server), gateways or routers which have automatic data transfer function.

Preferably, the input/output interface of the at least one peripheral computer and the corresponding sensor interface of the sensor means are serial interfaces, particularly RS232, RS485 or USB interfaces, and the second coupling means is then a wire or optical cable for connecting the interfaces in order to get a reliable and inexpensive connection from the sensor means to respective peripheral computer. In alternative, the input/output-interface of the at least one peripheral computer and the corresponding sensor interface of the remote sensor means are radio transmission, electrical interfaces, infrared transmission interfaces.

Preferably, the user terminal of the at least one user unit is a mobile communication interface in order to obtain and improve the attain high mobility of the remote user units.

The input/output interface or the communication interface of the central computer preferably transmit SMS short messages to the at least one user unit in order to enable us of widespread and handhelds expensive user units, for instance, electronic pagers, SCALL units and similar equipment.

In addition to SMS messages, the input/output interface or the communication interface of the central computer can transmit a telefax message or an e-mail as information to the user unit.

Preferably, the central computer of the invention is able to initiate by means of its automatic data transfer function a data connection via its communication interface, the first coupling means and the communication interface of the at least one peripheral computer in order to transfer data between the central computer and the at least one peripheral computer. This feature enables the central computer to request and to fetch the remote data and information on demand.

In alternative, at least one peripheral computer can initiate a data connection by means of its automatic data transfer function via its communication interface, the first coupling means and the communication interface of the central computer in order to transfer data between the central computer and the at least one peripheral computer.

A peripheral computer and the sensor means coupled to this remote peripheral computer by the second coupling means can be mounted in a mobile station or object, wherein the first coupling means for coupling the peripheral computer to the central computer is a communication network, particularly the GSM communication network. This configuration allows remote data acquisition, for instance, moving vehicle in order to provide a fleet management.

The sensor means can comprise sensors for detecting temperature, pressure, flow of water, level, PH value and/or percentage of oxygen as technical characteristics in order to use the inventive network system as waste water management system. In the case of abnormalities the connection is established and corresponding SMS messages are sent to the user units.

The sensor means can comprise sensors for monitoring the level and flow of water, recording authorised and unauthorised entrance and/or for surveying electricity consumption in order to use the network system of the invention as monitoring system of reservoirs of potable water or fresh water.

The sensor means can comprise sensors for measuring of temperature, pressure, humidity, wind speed and/or rain fall in order to use the network system of the present invention as a weather monitoring station.

The sensor means can comprise sensors for counting traffic and/or monitoring the conditions of the traffic environment in order to use the network system of the invention as traffic control and warning system.

The sensor means can comprise sensors for measuring air pollution, smoke and/or the concentration of SO₂ or other harmful substances in order to use the network system of the invention as an air quality control system.

The sensor means can comprise a sensor or voltage or current meter for detecting an electrical potential or voltage or current in a electrical unit or appliance as characteristic to be monitored in order to detect a malfunction or breakdown of the electrical appliance.

The sensor means can comprise a seismic sensor for detecting seismic movements of the earth or an earthquake.

The sensor means can comprise an identification or recognition sensor unit for identifying or recognising a person, an animal or an object which have a label thereon, identification means or card or have specific characteristics being readable by the identification or recognition sensor unit.

Further advantageous improvements of the subject matter of the present invention are mentioned in the dependent claims.

Further advantages, advantageous improvements and technical fields of application of the inventive network system are derivable from the following description of preferred embodiments of the network system of the present invention by way of example in connection with the attached drawings that show:
Fig. 1 an overall schematic view of a preferred implementation of the network system with remote data acquisition of the present invention; and
Fig. 2 an specific route of data acquisition and information exchange flow in the network system shown in Fig. 1.

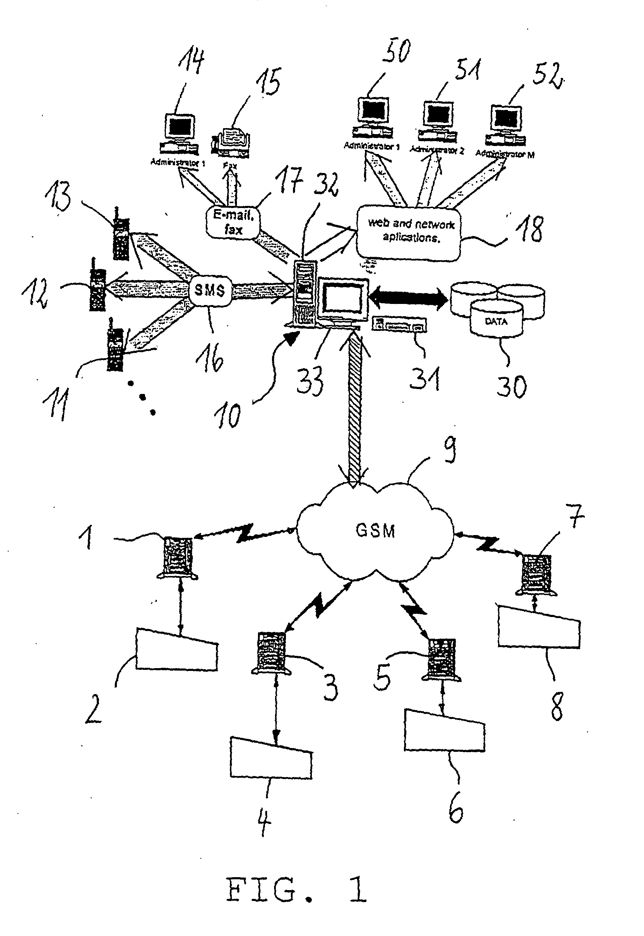

Fig. 1 shows a overall view of a preferred implementation of the network system for remote data acquisition of the present invention. The shown implementation of the invention comprises a central computer 10, at least one but generally an number of n peripheral computers 1, 3, 5 and 7 installed at location remote from the central computer 10, first coupling means 9 that are able to couple or connect the peripheral computers 1, 3, 5 and 7 to the central computer 10 in order to establish a connection between the central computer 10 and the peripheral computers 1, 3, 5 and 7 for information exchange and remote data acquisition, at least one but generally a number or several user units 11, 12, 13 being generally at a location remote from the central computer 10, third coupling means 16 for coupling or connecting the user units 11, 12, 13 to the central computer 10 and at least one but generally a number of n sensor means 2, 4, 6 and 8 that are coupled to the corresponding peripheral computers 1, 3, 5 and 7, respectively, by corresponding second coupling means 47.

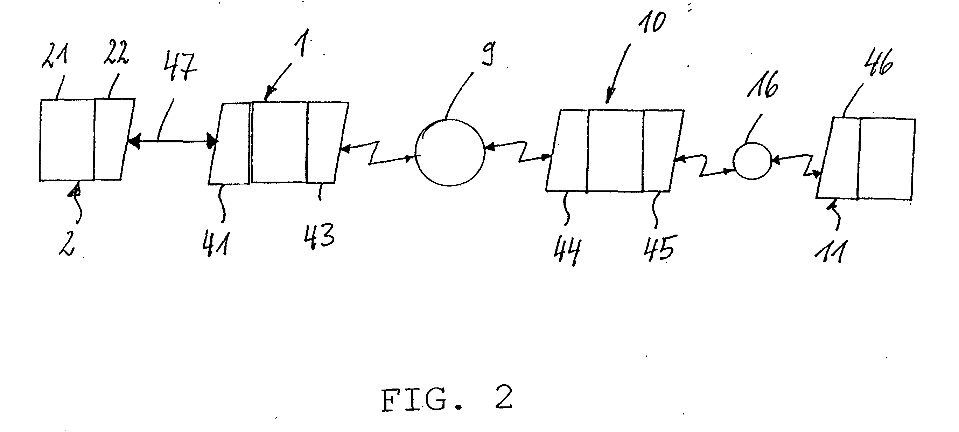

The peripheral computers 1, 3, 5 and 7 operate independently of each other. Each of the peripheral computers 1, 3, 5 and 7 comprises for instance an industrial computer on the basis of an Intel 386 or 486 of Pentium CPU with input/output units and boards, memory units particular a FLASH memory unit and a GSM modem as communication interface 43 (please refer to figure 2), for instance, a WAVECOM TYPE: WM 01-G900 modem on the basis of a AT Hayes instruction set and AT GSM instruction set which is able to initiate or start automatically or establish a connection under control of the processor unit of the respective peripheral computer 1, 3, 5 and 7. All interfaces and units of the whole peripheral computer are mounted in an robust housing. Further, depending on the specific application, the power supply of the peripheral computer installed at remote site is provided by, for instance, a battery or by a solar cell panel unit, if the remote site does not have connection to the mains network.

Each of the n peripheral computers 1, 3, 5 and 7 further comprises an output/input interface 41 that enables to establish a connection to the respective sensor means 2, 4, 6 and 8 each of which is assigned to the number of peripheral computers 1, 3, 5 and 7, respectively. Each of the peripheral computers therefore comprises a control function of the corresponding sensor means and a processing function for processing the remote data or information or signals provided by the sensor means and data transfer function for establishing the data connection to the central computer 10 in order to report or send the data of the sensor means 2 or the processed data or information to the central computer 10. These functions correspond to the software implemented in the respective peripheral computer 1, for instance, a control program for controlling the sensor means 2, a communication program for establishing and operating connection, a processing program or application program for processing the data and information from the sensor means and for converting or preparing the processed data into an appropriate format for communication interface 43 of the respective peripheral computer 1. Further an operating system software program is installed on the respective peripheral computer, for instance, MS WINDOWS 95, 98, NT or MS SQL of Microsoft, PHARLAP, LNX, PSOS, VX WORKS.

Each of the sensor means 2, 4, 6 and 8 is connected to its respective and corresponding one of the number of peripheral computers 1, 3, 5 and 7 as shown in figure 1. The sensor means 2 is coupled to the peripheral computer 1, the sensor means 4 is coupled to the peripheral computer 3, the sensor means 6 is coupled to the peripheral computer 5 and the sensor means 8 is coupled to the peripheral computer 7, wherein the coupling of each pair of sensor means and peripheral computer is provided by the second coupling means that, for instance, is a wire-cable, a radio wave transmission line, an infrared or optical transmission line or a GSM telephone transmission.

Each sensor means 2, 4, 6 and 8 comprises a sensor unit 21 and a sensor interface 22 that is connected to the sensor unit 21. Generally, the sensor unit 21 comprises the specific sensors, sensor element and electrical circuits for detecting a specific physical or technical characteristic of the environment, site or device or appliance where the sensor means is situated in order to detect the specific characteristic and to generate remote information and data as intended. The sensor interface 22 receives the detected information from the sensor unit and generally further processes and outputs the received information on the second coupling means 47 in order to transfer the information and data to the output/input interface 41 of the peripheral computer 1 that is assigned according to figure 2 showing a selected specific route of the network system in figure 1. This specific route, which of course is only an example for a lot of possible routes in the system of figure 1, extends from the sensor means 2 where remote data and information originates, via the peripheral computer 1, the communication network 9, the central computer 10, the SMS short message service 16 to the user unit 11 being remote from the central computer 10. According to the detailed route of figure 2 the detected data or information in the sensor means 2 is serially transferred by the second coupling means 47 to the peripheral computer 1. Therefore the sensor interface 22 and also the input/output interface 41 of the peripheral computer 1 are serial interfaces that meet, for instance, the RS 232, RS 485 or USB (Universal Serial Bus) standards. The second coupling means 47 is, therefore, a wire and optical cable for serial data transmission.

The central computer 10 is for instance placed at the headquarters of the network system administration and management and comprises at least one processor unit, database for mass storage, a memory unit, an input/output interface 45 and a communication interface 44. In a typical configuration the central computer 10 is adapted to operate as system network server and comprises one or several Pentium II CPU processor units 32 clocked with 300 MHz, a memory unit with 256 MB RAM, a SCSI harddisc 3 x 4GB as database mass storage 30, a dual port SCSI controller, an ethernet network adapter 10/100 for connection to a LAN (Local Area Network) to which the central computer 10 is connected, a 17 inch monitor 33 and additional peripheral units like compact disc player, keyboards, mouse etc..

The communication interface 44 of the central computer comprises one or more GSM modems, for instance on the basis of a WAVECOM TYPE: WM 01-G900 modem that preferably supports the regular AT Hayes instruction set and the AT GSM instruction set for control by the processor unit of the central computer 10. The communication interface 44 of the central computer 10, for instance, can in alternative be implemented by a RAS server (Remote Access Server) 31, gateways or routers in order to establish a point to point connection via the communication network to the respective peripheral computers 1, 3, 5 and 7. The software protocol for establishing and maintaining a connection between the communication interface 43, GSM modem, of each of the peripheral computers 1, 3, 5 and 7 and the communication interface 44 of the central computer 10 in point to point connection over the GSM network 9 is carried out on the basis of the well known TCP/IP communication protocol. As operating system, for instance, the Microsoft WINDOWS NT operating system is installed on the central computer 10. Further on the central computer 10 SQL software program for control of database storage and Exchange communication software for sending e-mails and faxes to user units 14 and 15 are installed on the central computer 10. Further, a controlling, administration and application program being adapted to the specific application of the inventive network system, for instance, as maintenance system, alarm system, monitoring system, etc., is software implemented in the central computer 10. Further the central computer 10 comprises the specific communication software for driving and controlling the communication interface 44 and the input/output interfaces 45 in order to establish and maintain the connection between each of the peripheral computers 1, 3, 5 and 7 and the central computer 10 and each of the user units 11, 12, 13, 14 and 15 and the central computer 10.

In the figures 1 and 2 the input/output interface 45 is a SMS short message service which output messages, instructions or information data to each of the user units 11 to 15 or to a group out of the user units via the third coupling means 16 being realised as SMS short message service network. Further the input/output interface 45 of the central computer 10 is adapted to send e-mails and telefax messages and information to a remote administrator PC unit 14 and a remote telefax receiving unit 15, respectively, which units are also user units in the sense of the present invention. The connection between the remote administrator PC unit 14 and the remote telefax unit 15 and the central computer 10 is, for instance, accomplished by a e-mail/telefax network 17 that, for instance, is the usual public telephone network. Further the input/output interface 45 and/or the communication interface 44 of the central computer 10 are able to establish a data communication between a number of further administrator PC units 50, 51 and 52 via a web and network application 18 in order to establish or to implement a remote control function of the central computer 10 by an system administrator or several system administrators or a system supervisor.

Each of the user units 11, 12 and 13 is adapted to communicate over the SMS short message service network 16 with the central computer 10. Each of the user units 11, 12 and 13 therefore comprises a user terminal 46 in order to establish and maintain a connection between each of the user units 11, 12 and 13 and the central computer 10 over the SMS short message network 16, if required.

In the following, the general function of the network system for remote data acquisition in accordance to the implementation of the present invention shown in the figure 1 will be described in a general manner with respect to figure 2 that shows a specific route of data communication within the network of figure 1.

The sensor unit 21 of the sensor means 2 detects a physical or technical characteristic and outputs information or data from the sensor interface 22 over the second coupling means 47 that, in this case, is a wire and optical cable for serial data communication, to the output/input interface 41 of the peripheral computer 1. The peripheral computer 1 receives and processes the data from the sensor means 2. The peripheral computer 1, for instance, compares the sensor data with a predetermined value or information stored in the memory unit of the peripheral computer 1. If the sensor data have a value exceeding the predetermined value, the peripheral computer 1, specifically its processor unit, generates information or data that, in the following, are referred to as remote alarm data or remote monitor data in accordance to its running application program. Accordingly, the peripheral computer 1 or remote control unit is able to monitor the condition or status of the physical or technical characteristic to be monitored.

The communication program of the peripheral computer 1 then, in the case of alarm data, triggers the communication interface 43 of the peripheral computer 1 in order to establish a telephone connection between the peripheral computer 1 and the central computer 10 for transferring the alarm data or information, or generally, remote data. If the communication interface 43 succeeds in establishing a telephone communication with the central computer 10 on the basis of the TCP/IP or som other communication protocol, which means, that the central computer 10 has answered and is prepared to receive the remote data or alarm data, then the peripheral computer 1 transmits the alarm data over the GSM telephone network to the communication interface 44 of the central computer 10.

After receiving the alarm data or remote data or information, the running application program in the central computer 10 processes the alarm data or remote data. and selects one user unit, 11 in figure 2, or a group of user units from the user units 11 to 15 on the basis of data and information stored in the database 30 of the central computer 10. After selecting, for instance, the user unit 11, the central computer 10, particularly its processor unit, triggers the communication program of the central computer 10 in order to establish a SMS short message service connection between the input/output interface 45 of the central computer 10, for instance an SMS short message service interface or communication interface, and the user terminal 46 of the user unit 11. If the central computer succeeds in establishing this connection, the central computer 10 then outputs a SMS short message to the user unit 11 over the SMS network 16. After receiving the SMS message, the user unit 11 indicates receipt of a SMS short message to the user of the user unit 11 and indicates the SMS message itself on its display.

Similar the central computer 10 is able to distribute remote data or information received from each of the peripheral computers 1, 3, 5 and 7 to each of the remote user units 11, 12 and 13. For instance the central computer 10 is able to send information or remote data received from the peripheral computer 5 to the user unit 13 if the central computer 10 has selected the user unit 13 that has to be informed in accordance to the application program.

In the following a short example is given for using the network system of the present invention as a maintenance system. The sensor means 2 and the peripheral computer 1 is situated at a remote location with regard to the central computer 10 of the maintenance system, for instance, at or in an electrical appliance, the power station of a plant.

A task of the maintenance system consists of recognising a malfunction or failure of the power station, in ensuring to eliminate the malfunction and in resuming normal functioning of the power station as soon as possible.

The sensor unit 21 of the sensor means 2 is a current meter or a voltage meter connected to a Schmidt trigger and a electronic analogue/digital converter that converts the analogue output signal of the Schmitt trigger into a digital valve which is output by the serial sensor interface 22 over the serial wire and optical cable 47 to the input/output interface 41 of the peripheral computer 1. If the power current or voltage of the power station falls below a certain value a malfunction of the plant would result, if no countermeasures would be taken. If the malfunction case arises the Schmidt trigger of the sensor unit alters its output signal, which is a strong indication of malfunction and the analogue/digital converter converts the output of the Schmidt trigger into digital data that are read by the peripheral computer 1.

The application program of the peripheral computer 1 recognises on the basis of the changing remote data from the sensor means 2 that a malfunction of the power station has occurred and, therefore, the peripheral computer 1 generates alarm data that indicate the malfunction. The alarm data are send over the GSM communication network 9 to the central computer 10 after establishing a corresponding GSM data connection between the peripheral computer 1 and the central computer 10.

After receiving the alarm data, the central computer executes corresponding procedure that is a part of the application program in order to select one of the user units 11 to 13. For instance, the selecting procedure at first searches for a user unit 11, 12, 13 being active in the moment at the location nearest to the source of malfunction. This searching is made in the database 30, where a table of all numbers, characteristics and statues of each of the user units 11 to 13 is stored in the form of digital data. For instance, the central computer 10 does find the user unit 13 not to be activated and that only the user units 11 and 12 are activated. Further the condition of the user unit 12 is found to be occupied which means that this user unit 12 in the moment is already involved in a maintenance procedure and, therefore, cannot be used. Only the user unit 11 is, for instance, in an activated condition and in waiting position for performing a maintenance task. The central computer 10, therefore, sends a corresponding SMS message over the SMS network 16 to the user unit 11. The unit 11 then indicates receipt of the SMS message and the user or the maintenance personal using this user unit 11 therefore is able to recognise the malfunction and to eliminate the malfunction immediately.

## Claims

1. Network system for exchanging information between n > 1 peripheral computers (1, 3, 5, 7) and a central computer (10) for remote data acquisition,
each of the n peripheral computers (1, 3, 5, 7) comprising at least one telephone communication interface (43) having means for automatic data transfer, a processor unit, a memory unit and an output/input interface (41),
the central computer (10) comprising at least one communication interface (44, 31) having means for automatic data transfer, a processor unit (32), a memory unit, a data base unit (30) and an output/input interface (45),
first coupling means (9) for coupling the telephone communication interface (44, 31) of the central computer (10) to the telephone communication interface (43) of anyone of the peripheral computers (1, 3, 5, 7) in order to exchange information between the central computer (10) and said peripheral computer,
several sensor means (2, 4, 6, 8) for providing sensor information or data that relate to at least one characteristic to be detected or monitored, the sensor means (2, 4, 6, 8) each comprising a sensor unit (21) for generating the sensor information and a sensor interface (22),
second coupling means (47) for coupling the input/output-interface (41) of one peripheral computer (1, 3, 5, 7) to the sensor interface (22) of a sensor means (2, 4, 6, 8) in order to exchange information between the peripheral computer and the sensor means or vice versa,
several peripheral user units (11, 12, 13) each comprising an user terminal (46),
third coupling means (16) for coupling the user terminal (46) of one user unit (11, 12, 13) to the input/output interface (45) or the communication interface (44, 31) of the central computer (10) in order to exchange information between the central computer (10) and one user unit (11, 12, 13),
wherein each peripheral computer (1, 3, 5, 7) compares the sensor data with a pretedermined value or information stored in the memory unit and in case the sensor data have a value exceeding the predetermined value the processor unit generates remote alarm data being assigned to a source of malfunction;
and the remote alarm data trigger the communication interface (43) of the peripheral computer (1) in order to establish a connection between the peripheral computer (1) and the central computer (10) for transferring the remote alarm data,
characterized in,
that, from the plurality of user units (11, 12, 13) in the database (30) that comprises a table of all numbers,addresses, characteristics and states of each of the user units (11, 12, 13), the central computer (10) searches such user units (11, 12) that are in an activated condition and in waiting position for performing a maintenance task and selects the one user unit (11) that is at a location nearest to the source of malfunction from the user units (11, 12) being found, and
that the central computer (10) automatically establishes a SMS short message service connection between the input/output interface (45) of the central computer (10) and the user terminal (46) of the selected user unit (11) in order to send a corresponding SMS message to the user unit (11) being selected.

2. Network system according to claim 1, wherein the first coupling means is the Public Switched Telephone Network (PSTN).

3. Network system according to claim 1, wherein the first coupling means is a leased line.

4. Network system according to claim 1, wherein the first coupling means is a mobile communication network; i. e. PCS 1900, DCS 1800, GSM 900, NMT, TACS and satellite communication network, i. e. Iridium SDMA, and Iridium AMPS with information transmission by radio waves.

5. Network system according to one of the preceding claims 1 to 4, wherein the communication interface of the central computer is an ISDN-modem.

6. Network system according to one of the claims 1 to 4, wherein the communication interface of the central computer is a GSM-modem.

7. Network system according to one of the preceding claims 1 to 6, wherein the communication interface of at least one of the peripheral computers is an ISDN-modem.

8. Network system according to one of the claims 1 to 6, wherein the communication interface of at least one of the peripheral computers is a GSM-modem.

9. Network system according to one of the preceding claims, wherein the input/output interface of the at least one peripheral computer and the corresponding sensor interface of the sensor means are serial interfaces, particularly RS232, RS485 or USB interfaces, and the second coupling means is a wire or optical cable for connecting the interfaces.

10. Network system according to one of claims 1 to 8, wherein the input/output interface of the at least one peripheral computer and the corresponding sensor interface of the sensor means are radio transmission or infrared transmission interfaces.

11. Network system according to one of the preceding claims, wherein the user terminal of the at least one user unit is a mobile telephone.

12. Network system according to one of the preceding claims, wherein the input/output interface or the communication interface of the central computer transmits SMS messages to the at least one user unit.

13. Network system according to one of the claims 1 to 11, wherein the input/output interface or the communication interface of the central computer transmits a telefax message as information to the at least one user unit.

14. Network System according to one of the claims 1 to 11, wherein the input/output interface or the communication interface of the central computer transmits an e-mail message as information to the at least one user unit.

15. Network system according to one of the preceding claims, wherein the central computer initiates by means of its automatic data transfer function a data connection via its communication interface, the first coupling means and the communication interface of the at least one peripheral computer in order to transfer data between the central computer and the at least one peripheral computer.

16. Network system according to one of the claims 1 to 14, wherein the at least one peripheral computer initiates by means of its automatic data transfer function a data connection via its communication interface, the first coupling means and the communication interface of the central computer in order to transfer data between the central computer and the at least one peripheral computer.

17. Network system according to one of the preceding claims, wherein the at least one peripheral computer and the sensor means coupled to the at least one peripheral computer by the second coupling means are mounted in a mobile station or in an object and wherein the first coupling means for coupling the peripheral computer to the central computer is a mobile telephone or communication network, particularly the GSM data network.

18. Network system according to one of the preceding claims, the sensor means comprising a sensor for detecting the temperature of the environment in place as a characteristic to be monitored.

19. Network system according to one of the preceding claims, the sensor means comprising a sensor for detecting the humidity of the environment as a characteristic to be monitored.

20. Network system according to one of the preceding claims, the sensor means comprising a sensor or voltage or current meter for detecting an electrical potential or voltage or current in an electrical unit or appliance as characteristic to be monitored.

21. Network system according to one of the preceding claims, the sensor means comprising a sensor for detecting smoke in the environment in place as characteristic to be monitored, or comprising a movement sensor for detecting the movement of an object in the environment or in a room.

22. Network system according to one of the preceding claims, the sensor means comprising a sensor, particularly an electrical or optical sensor, for detecting water, rain, the level of a fluid or liquid or the flow of a fluid to be monitored.

23. Network system according to one of the preceding claims, the sensor means comprising a seismic sensor for detecting seismic movements of the earth or an earthquake

24. Network system according to one of the preceding claims, the sensor means comprising a pressure sensor for detecting the pressure to be monitored.

25. Network system according to one of the preceding claims, the sensor means comprising a wind speed sensor for detecting the wind speed to be monitored.

26. Network system according to one of the preceding claims, the sensor means comprising a sensor for detecting pollution of an environment to be monitored.

27. Network system according to one of the preceding claims, the sensor means comprising a sensor for detecting, controlling or counting traffic to be monitored.

28. Network system according to one of the preceding claims, the sensor means comprising an identification or recognition sensor unit for identifying or recognising a person, an animal or an object which have a label thereon, an identification means or card or have specific characteristics being readable by the identification or recognition sensor unit.

## Patentansprüche

1. Netzwerksystem, um Informationen zwischen n > 1 peripheren Rechnern (1, 3, 5, 7) und einem Zentralrechner (10) für Datenfernbeschaffung auszutauschen,
wobei jeder der n peripheren Rechner (1, 3, 5, 7) wenigstens eine Telefonkommunikationsschnittstelle (43) umfasst, die Mittel für automatische Datenübertragung, eine Prozessoreinheit, eine Speichereinheit und eine Ausgabe-/Eingabeschnittstelle (41) aufweist,
wobei der Zentralrechner (10) wenigstens eine Kommunikationsschnittstelle (44, 31) umfasst, die Mittel für automatische Datenübertragung, eine Prozessoreinheit (32), eine Speichereinheit, eine Datenbasiseinheit (30) und eine Ausgabe-/Eingabeschnittstelle (45) aufweist,
ein erstes Verbindungsmittel (9), um die Telefonkommunikationsschnittstelle (44, 31) des Zentralrechners (10) mit der Telefonkommunikationsschnittstelle (43) irgendeines der peripheren Rechner (1, 3, 5, 7) zu verbinden, um Informationen zwischen dem Zentralrechner (10) und dem peripheren Rechner auszutauschen,
mehrere Sensormittel (2, 4, 6, 8), um Sensorinformationen oder -daten bereitzustellen, die sich auf wenigstens eine zu ermittelnde oder zu überwachende Eigenschaft beziehen, wobei die Sensormittel (2, 4, 6, 8) jeweils eine Sensoreinheit (21), um die Sensorinformation zu erzeugen, und eine Sensorschnittstelle (22) umfassen,
ein zweites Verbindungsmittel (47), um die Eingabe-/Ausgabeschnittstelle (41) eines peripheren Rechners (1, 3, 5, 7) mit der Sensorschnittstelle (22) eines Sensormittels (2, 4, 6, 8) zu verbinden, um Informationen zwischen dem peripheren Rechner und den Sensormitteln oder umgekehrt auszutauschen,
mehrere periphere Benutzereinheiten (11, 12, 13), die jede ein Benutzerterminal (46) umfassen,
ein drittes Verbindungsmittel (16), um das Benutzerterminal (46) einer Benutzereinheit (11, 12, 13) mit der Eingabe-/Ausgabeschnittstelle (45) oder der Kommunikationsschnittstelle (44, 31) des Zentralrechners (10) zu verbinden, um Informationen zwischen dem Zentralrechner (10) und einer Benutzereinheit (11, 12, 13) auszutauschen,
wobei jeder periphere Rechner (1, 3, 5, 7) die Sensordaten mit einem vorbestimmten Wert oder einer vorbestimmten Informationen vergleicht, die in der Speichereinheit gespeichert sind, und falls die Sensordaten einen Wert haben, der den vorbestimmten Wert überschreitet, erzeugt die Prozessoreinheit Fernalarmdaten, die einem Ursprung von Störungen zugewiesen sind,
und die Fernalarmdaten lösen die Kommunikationsschnittstelle (43) des peripheren Rechners (1) auslösen, um eine Verbindung zwischen dem peripheren Rechner (1) und dem Zentralrechner (10) aufzubauen, um die Fernalarmdaten zu übertragen,
**dadurch gekennzeichnet,**
dass aus mehreren Benutzereinheiten (11, 12, 13) in der Datenbank (30), die eine Liste aller Nummern, Adressen, Eigenschaften und Zustand jeder der Benutzereinheiten (11, 12, 13) umfasst, der Zentralrechner (10) diejenigen Benutzereinheiten (11, 12) aussucht, die in einem aktivierten Zustand und in Wartestellung sind, um eine Wartungsaufgabe auszuführen, und diejenige Benutzereinheit (11), die am nächsten zum gefundenen Ursprung der Störung liegt, aus den gefundenen Benutzereinheiten (11, 12) aussucht, und
dass der Zentralrechner (10) automatisch eine SMS Kurzmitteilungsdienst-Verbindung zwischen der Eingabe-/Ausgabeschnittstelle (45) des Zentralrechners (10) und dem Benutzerterminal (46) der ausgewählten Benutzereinheit (11) aufbaut, um eine entsprechende SMS Nachricht an die ausgewählte Benutzereinheit (11) zu senden

2. Netzwerksystem gemäß Anspruch 1, wobei das erste Verbindungsmittel das öffentlich vermittelte Telefonnetzwerk (PSTN) ist.

3. Netzwerksystem gemäß Anspruch 1, wobei das erste Verbindungsmittel eine gemietete Leitung ist.

4. Netzwerksystem gemäß Anspruch 1, wobei das erste Verbindungsmittel ein Mobilkommunikationsnetzwerk ist, das heißt PCS 1900, DCS 1800, GSM 900, NMT, TACS und ein Satellitenkommunikationsnetzwerk, das heißt Iridium SDMA und Iridium AMPS mit Informationsübertragung durch Radiowellen.

5. Netzwerksystem gemäß einem Anspruch 1 bis 4, wobei die Kommunikationsschnittstelle des Zentralrechners ein ISDN-Modem ist.

6. Netzwerksystem gemäß einem Anspruch 1 bis 4, wobei die Kommunikationsschnittstelle des Zentralrechners ein GSM-Modem ist.

7. Netzwerksystem gemäß einem der voran stehenden Ansprüche 1 bis 6, wobei die Kommunikationsschnittstelle mindestens eines peripheren Rechners ein ISDN-Modem ist.

8. Netzwerksystem gemäß einem der Ansprüche 1 bis 6, wobei die Kommunikationsschnittstelle mindestens eines peripheren Rechners ein GSM-Modem ist.

9. Netzwerksystem gemäß einem der voran stehenden Ansprüche, wobei die Eingabe/Ausgabeschnittstelle mindestens eines peripheren Rechners und die entsprechende Sensorschnittstelle des Sensormittels serielle Schnittstellen sind, insbesondere RS232, RS485 oder USB-Schnittstellen, und das zweite Verbindungsmittel ein Draht oder ein optisches Kabel ist, um die Schnittstelle zu verbinden.

10. Netzwerksystem gemäß einem Anspruch 1 bis 8, wobei die Eingabe-/Ausgabeschnittstelle mindestens eines peripheren Rechners und die entsprechende Sensorschnittstelle des Sensormittels Funkübertragungs- oder Infrarotübertragungsschnittstellen sind.

11. Netzwerksystem gemäß einem der voran stehenden Ansprüche, wobei das Benutzerterminal wenigstens einer Benutzereinheit ein Mobiltelefon ist.

12. Netzwerksystem gemäß einem der voran stehenden Ansprüche, wobei die Eingabe/Ausgabeschnittstelle oder die Kommunikationsschnittstelle des Zentralrechners SMS Nachrichten an mindestens eine Benutzereinheit überträgt.

13. Netzwerksystem gemäß einem Anspruch 1 bis 11, wobei die Eingabe-/Ausgabeschnittstelle oder die Kommunikationsschnittstelle des Zentralrechners eine Telefax Nachricht als Information an mindestens eine Benutzereinheit überträgt.

14. Netzwerksystem gemäß einem Anspruch 1 bis 11, wobei die Eingabe-/Ausgabeschnittstelle oder die Kommunikationsschnittstelle des Zentralrechners eine E-mail als Information an mindestens eine Benutzereinheit überträgt.

15. Netzwerksystem gemäß einem der voran stehenden Ansprüche, wobei der Zentralrechner mittels seiner automatischen Datenübertragungsfunktion eine Datenverbindung über seine Kommunikationsschnittstelle, dem ersten Verbindungsmittel und der Kommunikationsschnittstelle mindestens eines peripheren Rechners aufbaut, um Daten zwischen dem Zentralrechner und mindestens einem peripheren Rechner zu übertragen.

16. Netzwerksystem gemäß einem Anspruch 1 bis 14, wobei der mindestens eine periphere Rechner mittels seiner automatischen Datenübertragungsfimktion eine Datenverbindung über seine Kommunikationsschnittstelle, dem ersten Verbindungsmittel und der Kommunikationsschnittstelle des Zentralrechners aufbaut, um Daten zwischen dem Zentralrechner und dem mindestens einem peripheren Rechner zu übertragen.

17. Netzwerksystem gemäß einem der voran stehenden Ansprüche, wobei mindestens ein peripherer Rechner und die Sensormittel, die mit dem mindestens einem peripheren Rechner über das zweite Verbindungsmittel verbunden ist, in einer Mobilstation oder in einem Objekt montiert sind, und wobei das erste Verbindungsmittel zur Verbindung des peripheren Rechners mit dem Zentralrechner ein Mobiltelefon oder -kommunikationsnetzwerk, im besonderen ein GSM Datennetzwerk, ist.

18. Netzwerksystem gemäß einem der voran stehenden Ansprüche, wobei das Sensormittel einen Sensor umfasst, um die Temperatur der örtlichen Umgebung als eine zu überwachende Eigenschaft zu ermitteln.

19. Netzwerksystem gemäß einem der voran stehenden Ansprüche, wobei das Sensormittel einen Sensor umfasst, um die Feuchtigkeit der Umgebung als eine zu überwachende Eigenschaft zu ermitteln.

20. Netzwerksystem gemäß einem der voran stehenden Ansprüche, wobei das Sensormittel einen Sensor oder ein Spannungs- oder Strommeßgerät umfasst, um ein elektrisches Potential oder eine elektrische Spannung oder einen elektrischen Strom in einer elektrischen Einheit oder Vorrichtung als zu überwachende Eigenschaft zu ermitteln.

21. Netzwerksystem gemäß einem der voran stehenden Ansprüche, wobei das Sensormittel einen Sensor umfasst, um Rauch in der örtlichen Umgebung als zu überwachende Eigenschaft zu ermitteln, oder wobei es einen Bewegungssensor umfasst, um die Bewegung eines Objekts in der Umgebung oder in einem Raum zu ermitteln.

22. Netzwerksystem gemäß einem der voran stehenden Ansprüche, wobei das Sensormittel einen Sensor umfasst, insbesondere einen elektrischen oder optischen Sensor, um Wasser, Regen, den Stand eines Fluids oder einer Flüssigkeit, oder den Fluss eines zu überwachenden Fluids zu ermitteln.

23. Netzwerksystem gemäß einem der voran stehenden Ansprüche, wobei das Sensormittel einen seismischen Sensor umfasst, um seismische Bewegungen der Erde oder ein Erdbeben zu ermitteln.

24. Netzwerksystem gemäß einem der voran stehenden Ansprüche, wobei das Sensormittel einen Drucksensor umfasst, um den zu überwachenden Druck zu ermitteln.

25. Netzwerksystem gemäß einem der voran stehenden Ansprüche, wobei das Sensormittel einen Windgeschwindigkeitssensor umfasst, um die zu überwachende Windgeschwindigkeit zu ermitteln.

26. Netzwerksystem gemäß einem der voran stehenden Ansprüche, wobei das Sensormittel einen Sensor umfasst, um Verschmutzung einer zu überwachenden Umgebung zu ermitteln.

27. Netzwerksystem gemäß einem der voran stehenden Ansprüche, wobei das Sensormittel einen Sensor umfasst, um den zu überwachenden Verkehr zu ermitteln, zu überwachen oder zu zählen.

28. Netzwerksystem gemäß einem der voran stehenden Ansprüche, wobei das Sensormittel eine Identifizierungs- oder Wiedererkennungssensoreinheit umfasst, um eine Person, ein Tier oder einer Objekt mit einer Markierung darauf, einem Identifizierungsmittel oder einer Karte, oder das spezifische Eigenschaften hat, die durch die Identifizierungs- oder Wiedererkennungssensoreinheit lesbar sind, zu identifizieren oder wiederzuerkennen

## Revendications

1. Système de réseau pour échanger des données entre n > 1 ordinateurs périphériques (1, 3, 5, 7) et un ordinateur central (10) pour l'acquisition de données à distance,
chacun des n ordinateurs périphériques (1, 3, 5, 7) comprenant au moins une interface de communication téléphonique (43) possédant un moyen pour le transfert automatique de données, une unité de processeur, une unité de mémoire et une interface d'entrée / sortie (41),
l'ordinateur central (10) comprenant au moins une interface de communication (44, 31) ayant un moyen pour le transfert automatique de données, une unité de processeur (32), une unité de mémoire, une unité de base de données (30) et une interface d'entrée / sortie (45),
un premier moyen de couplage (9) pour coupler l'interface de communication téléphonique (44, 31) de l'ordinateur central (10) à l'interface de communication téléphonique (43) de l'un quelconque des ordinateurs périphériques (1, 3, 5, 7) de façon à échanger des données entre l'ordinateur, central (10) et ledit ordinateur périphérique,
plusieurs moyens de détection (2, 4, 6, 8) pour fournir une information de détection ou des données qui se rapportent à au moins une caractéristique à détecter ou à surveiller, les moyens de détection (2, 4, 6, 8) comprenant chacun une unité de détection (21) pour générer l'information de détection et une interface de détection (22),
un deuxième moyen de couplage (47) pour coupler l'interface d'entrée / sortie (41) d'un des ordinateurs périphériques (1, 3, 5, 7) à l'interface de détection (22) d'un moyen de détection (2, 4, 6, 8) de façon à échanger une information entre l'ordinateur et le moyen de détection ou vice versa,
plusieurs unités périphériques d'utilisateur (11, 12, 13) comprenant chacune un poste d'utilisateur (46),
un troisième moyen de couplage (16) pour coupler le poste utilisateur (46) d'une unité d'utilisateur (11, 12, 13) à l'interface d'entrée / sortie (45) ou l'interface de communication (44, 31) de l'ordinateur central (10) de façon à échanger une information entre l'ordinateur central (10) et une unité d'utilisateur (11, 12, 13),
dans lequel chaque ordinateur périphérique (1, 3, 5, 7) compare les données de détection à une valeur prédéterminée ou une information stockée dans l'unité de mémoire et au cas où les données de détection auraient une valeur dépassant la valeur prédéterminée l'unité de processeur génère des données d'alarme à distance qui sont affectées à une origine de dysfonctionnement;
et les données d'alarme à distance déclenchent l'interface de communication (43) de l'ordinateur périphérique (1) de façon à établir une connexion entre l'ordinateur périphérique (1) et l'ordinateur central (10) pour transférer les données d'alarme à distance,
caractérisé en ce
que l'ordinateur central (10) recherche parmi la pluralité d'unités d'utilisateur (11, 12, 13) figurant dans la base de données (30), qui comprend une table de tous les numéros, adresses, caractéristiques et états de chacune des unités d'utilisateur (11, 12, 13), les unités d'utilisateur (11, 12) qui sont en état activé et en position d'attente pour accomplir une tâche d'entretien et choisit parmi les unités d'utilisateur (11, 12) trouvées l'unité d'utilisateur (11) qui est à l'endroit le plus proche de l'origine de dysfonctionnement, et
que l'ordinateur central (10) établit automatiquement une connexion de service de message bref (SMS) entre l'interface d'entrée / sortie (45) de l'ordinateur central (10) et le poste utilisateur (46) de l'unité d'utilisateur choisie (11) de façon à envoyer un message SMS correspondant à l'unité d'utilisateur (11) choisie.

2. Système de réseau selon la revendication 1, dans lequel le premier moyen de couplage est le réseau téléphonique public commuté (PSTN).

3. Système de réseau selon la revendication 1, dans lequel le premier moyen de couplage est une ligne spécialisée.

4. Système de réseau selon la revendication 1, dans lequel le premier moyen de couplage est un réseau de communications mobile, c.-à-d. le PCS 1900, le DCS 1800, le GSM 900, le NMT, le TACS et un réseau de communications par satellite, par exemple le SDMA Iridium et l'AMPS Iridium à transmission d'information par ondes radioélectriques.

5. Système de réseau selon l'une quelconque des revendications 1 à 4, dans lequel l'interface de communication de l'ordinateur central est un modem RNIS.

6. Système de réseau selon l'une quelconque des revendications 1 à 4, dans lequel l'interface de communication de l'ordinateur central est un modem GSM.

7. Système de réseau selon l'une quelconque des revendications 1 à 6, dans lequel l'interface de communication d'au moins un des ordinateurs périphériques est un modem RNIS.

8. Système de réseau selon l'une quelconque des revendications 1 à 6, dans lequel l'interface de communication d'au moins un des ordinateurs périphériques est un modem GSM.

9. Système de réseau selon l'une quelconque des revendications précédentes, dans lequel l'interface d'entrée / sortie du au moins un ordinateur périphérique et l'interface de détection correspondante du moyen de détection sont des interfaces sérielles, en particulier des interfaces RS232, RS485 ou USB, et le deuxième moyen de couplage est un câble ou un câble optique servant à relier les interfaces.

10. Système de réseau selon l'une quelconque des revendications 1 à 8, dans lequel l'interface d'entrée / sortie du au moins un ordinateur périphérique et l'interface correspondante de détection des moyens de détection sont des interfaces de transmission par ondes radioélectriques ou de transmission par infrarouges.

11. Système de réseau selon l'une quelconque des revendications précédentes, dans lequel le poste utilisateur de la au moins une unité d'utilisateur est un poste radiotéléphonique mobile.

12. Système de réseau selon l'une quelconque des revendications précédentes, dans lequel l'interface d'entrée / sortie ou l'interface de communication de l'ordinateur central transmet des messages par SMS à la au moins une unité d'utilisateur.

13. Système de réseau selon l'une quelconque des revendications 1 à 11, dans lequel l'interface d'entrée / sortie ou l'interface de communication de l'ordinateur central transmet un message par téléfax comme information à la au moins une unité d'utilisateur.

14. Système de réseau selon l'une quelconque des revendications 1 à 11, dans lequel l'interface d'entrée / sortie ou l'interface de communication de l'ordinateur central transmet un message par courrier électronique comme information à la au moins une unité d'utilisateur.

15. Système de réseau selon l'une quelconque des revendications précédentes, dans lequel l'ordinateur central établit au moyen de sa fonction de transfert automatique de données une connexion de données par l'intermédiaire de son interface de communication, du premier moyen de couplage et de l'interface de communication du au moins un ordinateur périphérique de façon à transférer des données entre l'ordinateur central et le au moins un ordinateur périphérique.

16. Système de réseau selon l'une quelconque des revendications 1 à 14, dans lequel le au moins un ordinateur périphérique établit au moyen de sa fonction de transfert automatique de données une connexion de données par l'intermédiaire de son interface de communication, du premier moyen de couplage et de l'interface de communication de l'ordinateur central de façon à transférer des données entre l'ordinateur central et le au moins un ordinateur périphérique.

17. Système de réseau selon l'une quelconque des revendications précédentes, dans lequel le au moins un ordinateur périphérique et le moyen de détection couplé audit au moins un ordinateur périphérique par le deuxième moyen de couplage sont montés dans un poste mobile ou dans un objet et dans lequel le premier moyen de couplage servant à coupler l'ordinateur périphérique à l'ordinateur central est un poste radiotéléphonique mobile ou un réseau de communications, en particulier le réseau de données GSM.

18. Système de réseau selon l'une quelconque des revendications précédentes, le moyen de détection comprenant un capteur pour relever la température ambiante sur place comme caractéristique à surveiller.

19. Système de réseau selon l'une quelconque des revendications précédentes, le moyen de détection comprenant un capteur pour relever l'humidité ambiante comme caractéristique à surveiller.

20. Système de réseau selon l'une quelconque des revendications précédentes, le moyen de détection comprenant un capteur ou voltmètre ou ampèremètre pour détecter un potentiel ou une tension ou un courant électrique dans une unité ou appareil électrique comme caractéristique à surveiller.

21. Système de réseau selon l'une quelconque des revendications précédentes, le moyen de détection comprenant un capteur pour détecter de la fumée dans l'environnement sur place comme caractéristique à surveiller, ou comprenant un capteur de mouvement pour détecter le mouvement d'un objet dans l'environnement ou dans une pièce.

22. Système de réseau selon l'une quelconque des revendications précédentes, le moyen de détection comprenant un capteur, en particulier un capteur électrique ou optique, pour détecter l'eau, la pluie, le niveau d'un fluide ou d'un liquide ou l'écoulement d'un fluide à surveiller.

23. Système de réseau selon l'une quelconque des revendications précédentes, le moyen de détection comprenant un capteur sismique pour détecter des mouvements sismiques de la terre ou un tremblement de terre.

24. Système de réseau selon l'une quelconque des revendications précédentes, le moyen de détection comprenant un capteur de pression pour relever la pression à surveiller.

25. Système de réseau selon l'une quelconque des revendications précédentes, le moyen de détection comprenant un capteur de vitesse du vent pour relever la vitesse du vent à surveiller.

26. Système de réseau selon l'une quelconque des revendications précédentes, le moyen de détection comprenant un capteur pour détecter la pollution d'un environnement à surveiller.

27. Système de réseau selon l'une quelconque des revendications précédentes, le moyen de détection comprenant un capteur pour détecter, réguler ou compter le trafic à surveiller.

28. Système de réseau selon l'une quelconque des revendications précédentes, le moyen de détection comprenant une unité de capteur d'identification ou de reconnaissance pour identifier ou reconnaître une personne, un animal ou un objet qui présentent une marque, ou un moyen ou une carte d'identification ou présentent des caractéristiques spécifiques lisibles par l'unité de capteur d'identification ou de reconnaissance.
